# EUROPEAN PATENT SPECIFICATION

(11) **EP 0 544 043 B1**
(45) Date of publication and mention of the grant of the patent: **28.02.1996**
(21) Application number: 91403180.2
(22) Date of filing: 25.11.1991
(51) Int. Cl.: G01D 5/20, G01B 7/30

(54) **Positional encoder**
Positionsgeber
Capteur de position

(43) Date of publication of application: 02.06.1993
(73) Proprietor: NEOPOST INDUSTRIE, F-92220 Bagneux (FR)
(72) Inventor: Pike, D. Timothy, Castro Valley, California 94552 (US)
(74) Representative: Weinmiller, Jürgen

(56) References cited:
- FR-A- 2 458 075
- FR-A- 2 605 400
- PATENT ABSTRACTS OF JAPAN vol. 010, no. 382 (P-529) 20 December 19866 & JP-A-61 172 077

## Description

This invention relates generally to a positional encoding device, and in particular to a digital encoding device of the type defined in the preamble of claim 1.

The use of a positional encoding device is found in many applications. Various methods are used and include direct contact, contact-less, and electro-optical systems. Direct contact systems generally include a rotor and electrical wipers. Frictional contact between the rotor and wipers provides the positional encoding means. However, this frictional movement leads to deterioration of the wipers and rotor.

Contact-less systems involve capacitive or inductive electromagnetic circuits that are analog or digital in application. The analog method generally requires complex signal processing techniques, while the digital method generally requires intricate time dependent signal processing techniques. Both methods of signal processing require complicated circuitry with precise component matching.

Electro-optical systems generally use fiber optics and complex multiplexers. The disadvantages associated with optical systems are that optical systems are relatively expensive to manufacture compared to the contact and contact-less systems and are generally limited to uses involving the processing of a large number of positions (on the order of 1000).

From Patent Abstracts of Japan relating to publication number JP 61-172077 a Multiple Magnetic Detection Switch is known having a large number of coils which can be saturated by a magnetic core passing nearby. This system requires as many coils as there are positions to be discriminated. Therefore this system is expensive.

The present invention as defined in claim 1 provides a contactless multi-position sensor that avoids the drawbacks of the cited prior art.

Preferred embodiments of this sensor are defined in the dependent claims.

According to the invention, a multiposition sensor device includes a plurality of inductive-type coils arranged in a first array and a plurality of plates arranged in a second array. The plates are juxtaposed and movable relative to the coils, allowing the coils and the plates to register in any of a plurality of unique coupling arrangements. The multiposition sensor device further includes a circuit coupled to each one of the coils, which generates a first signal when a plate is registered with its associated coil and a second signal when no plate is registered with its associated coil.

In one embodiment, the coils and plates lie in parallel planes. The coils are angularly spaced along a given circumference in one plane while the plates are angularly spaced along a corresponding circumference in the other plane to allow easy rotation of one array with respect to the other. In one specific embodiment, there are four coils and five plates. The four coils and five plates interact as the plate array is rotated relative to the coil array and yield ten unique plate-coil combinations. These ten unique arrangements create a basis for a decimal counter.

Each of the four coils is connected to a comparator circuit, and allow for a binary-code-decimal encoder to be formed. The circuit for each coil incorporates the coil as part of a tank circuit, and thus provides one of two outputs, depending on whether or not the coil has a plate registered to it.

In another embodiment, the coils and plates are arranged in linear arrays in parallel planes. And in yet another embodiment, the coil and plate arrays are on the perimeters of concentric cylinder. The plate and coil arrays shift with respect to one another, forming multiple unique plate-coil combinations.

The invention will now be described in greater detail by means of preferred embodiments and the enclosed drawings.

Fig. 1 is an exploded perspective view of a ten-position inductive sensor according to the present invention;
Fig. 2A is a top plan view of a coil mount according to the present invention;
Fig. 2B is a top plan view of a detuner for mounting on the coil mount;
Fig. 2C is a top plan view of the ten-position inductive sensor according to Fig. 1;
Fig. 3 is a circuit schematic diagram of a signal processing circuit incorporating one of the coils;
Fig. 4 is another embodiment of the ten-position inductive sensor according to the present invention; and
Fig. 5 is yet another embodiment of the ten-position inductive sensor according to the present invention.

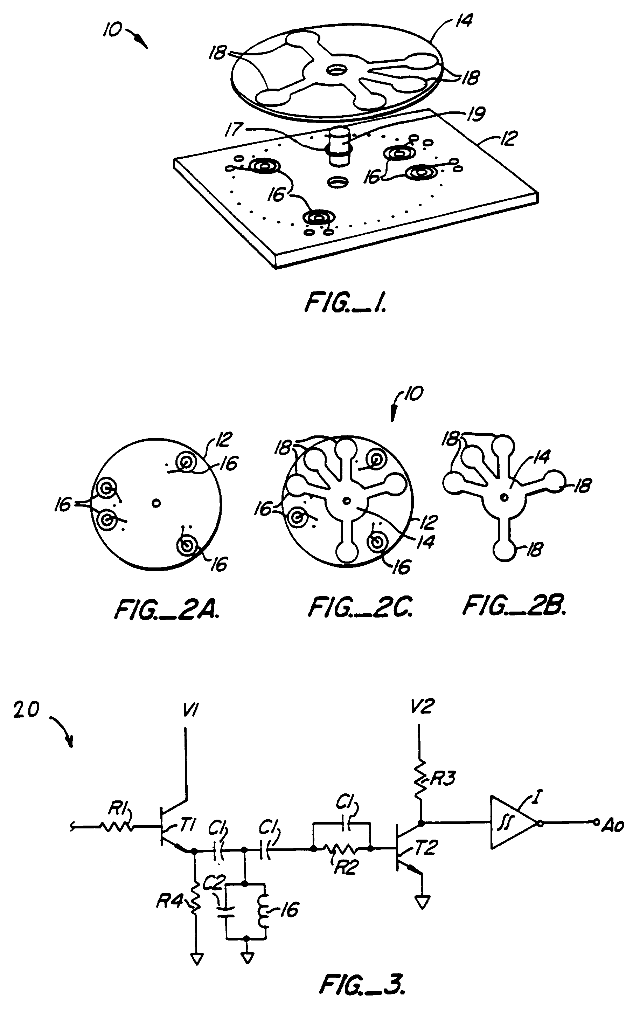

Fig. 1 is an exploded perspective view of a ten-position inductive sensor 10. Inductive sensor 10 includes a coil mount 12 juxtaposed a detuner 14.

Coil mount 12 is further shown in Fig. 2A. Coil mount 12 has four coils 16 that lie in a first plane and are angularly spaced about a given circumference. Each coil 16 is preferably fabricated on coil mount 12 made of an insulating type of material, such as fiberglass or plastic printed circuit board, using well known printed circuit board fabrication techniques. Preferably, each coil 16 has five windings of 0,25 mm (10 mil) printed-circuit traces with 0,25 mm (10 mil) separation. Coils 16 are placed about the circumference in multiples of π/5 radians. First coil 16 is located at π/5; second coil 16 is located at 4π/5; third coil 16 is located at 7π/5; and fourth coil 16 is located at 10π/5. It is apparent to one of ordinary skill in the art that the arrangement of the coils is the same whether done clockwise or counterclockwise about the given circumference.

Detuner 14 is shown in Fig. 2B. Detuner 14 is a spider shaped element with five appendages having a plate 18 at the tip of each appendage. The five plates 18 lie in a second plane and are also angularly spaced about a corresponding circumference in multiples of π/5 radians, much like coils 16. First plate 18 is at π/5, second plate 18 is located at 2π/5; third plate 18 is located at 3π/5; fourth plate 18 is located at 5π/5; and fifth plate is located at 8π/5. Again, it is apparent to one of ordinary skill in the art that the positioning can be done in a clockwise or counterclockwise direction about the corresponding circumference.

Fig. 2C illustrates how detuner 14 is juxtaposed parallel coil mount 12. Coil mount 12 and detuner 14 share a common central axis allowing plates 18 and coils 16 to coincide. In addition, detuner 14 is separated from coil mount 12 by air, paper or mylar, or other like dielectric material. Fig. 1 shows how a bushing 17 fits on an axis 19 to form air separation between detuner 14 and coil mount 12. Paper or mylar of 50 µm (2 mil) thickness provides adequate separation when used. Ideally, coils 16 and plates 18 are positioned in a circle of the same given circumference. Then, as coil mount 12 and detuner 14 are rotated with respect to one another, coils 16 and plates 18 coincide to form ten (10) unique coil/plate combinations. Each coil 16 is subsequently connected to a separate signal processing circuit 20 as shown in Fig. 3.

The circuit for each coil incorporates the coil as part of a tank circuit, and thus provides one of two outputs, depending on whether or not the coil has a plate registered to it. Along with coil 16, circuit 20 includes resistors R₁, R₂, R₃, and R₄, capacitors C₁ and C₂, transistors T₁ and T₂ and integrator I. The implementation of circuit 20 as shown in Fig. 3 is well within the ability of one of ordinary skill in the art. Moreover, the four coils readily form a binary-code-decimal (BCD) encoder as the four circuits allow the ten unique coil/plate combinations to digitally form a BCD output.

As plate 18 is brought in proximity with coil 16, the signal in circuit 20 is altered. Furthermore, plate 18 does not actually need to contact coil 16 to alter the signal. This contact-less system allows the plates and coils to avoid the physical wear inherent in contact systems such as rotor/brush devices. In addition, the circuit used to generate a first signal only involves simple components compared to the complex and detailed components needed in well known signal processing or time dependant electromagnetic sensing circuits. Also, due to these simple circuit components and the simplicity of the coil and plate design, the present invention can be easily and inexpensively made compared to electro-optical systems.

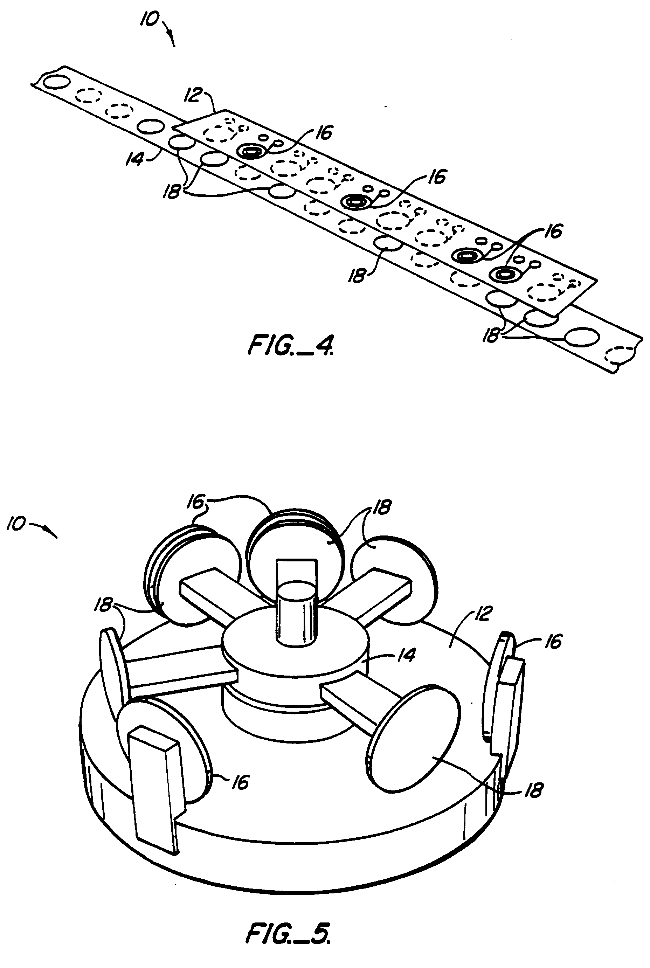

The angular displacement of coils 16 and plates 18 about a given circumference is merely one embodiment of the present invention. It would be apparent to those skilled in the art that other embodiments are possible. For example, as shown in Fig. 4, coils 16 could be placed in a linear arrangement in one plane having ten positions, with a coil at the first, fourth, seventh, and tenth position. Also, plates 18 would then be placed in a linear ten section arrangement in another plane parallel to the first, with single coils at the first, second, third, fifth, and eighth position. This linear arrangement requires the plate sequence to be repeated depending upon the direction the plates are to be shifted (left or right) with respect to the coils. All of the numbers used in Fig. 4 are identical and correspond to the same elements found in Fig. 1.

Fig. 5 illustrates yet another embodiment of the present invention. In this embodiment, coils 16 are mounted on the periphery of one cylinder and plates 18 are mounted along a periphery of a second concentric cylinder outside the first cylinder. Coils 16 and plate 18 are positioned so that they face each other when in proximity as detuner 14 rotates with respect to coil mount 12. It is also apparent that coil mount 17 could be the inner cylinder and detuner 14 could be the outer cylinder.

The invention has now been explained with reference to specific embodiments. Other embodiments will be apparent to those of ordinary skill in the art. Such embodiments would include concentric spheres having plates and coils mounted on the inner surface of the outer sphere and on the outer surface of the inner sphere. The concentric cylinders of Fig. 5 could work translationally as well as rotationally with added plates and coils along different sections of the cylinders. In both the linear and rotary embodiments, a second axis could be added to extend the application beyond the decimal based design. It is therefore not intended that the invention be limited except as indicated by the appended claims.

## Claims

1. A multi-position sensor apparatus comprising:
- a first mounting element (12) having a plurality of induction coils (16) in a first selected pattern,
- a second mounting element (14) juxtaposed to said first mounting element (12), so that when one of the mounting elements is in one of a limited number of registered positions with respect to the other, at least one coil mounted on the first element interacts with a plate (18) mounted on the second element,
- a plurality of circuits (20), each coupled to a respective one of said coils, each circuit having an output terminal (Ao), each circuit operating to provide a first signal level at said output terminal when a plate (18) is registered to its associated coil (16) and a second signal level when no plate is registered to its associated coil,
characterized in that the second mounting element (14) has a plurality of plates (18) positioned in a second selected pattern, so that for any registered position, the plates interact with a unique combination of said coils, thereby providing a multibit output.

2. The apparatus according to claim 1, characterized in that the first mounting element (12) is disposed in a first plane and the second mounting element (14) is disposed in a second plane parallel to the first one.

3. The apparatus according to claim 2, characterized in that the two patterns are circular about a common axis (19) which is also the relative axis rotation of said elements, when shifting from one of said positions to another.

4. The apparatus according to claim 1, characterized in that the coils (16) on one hand and the plates (18) on the other hand are disposed on two concentric cylinders constituting said first and second mounting elements, and that said cylinders rotate about said axis relative to each other when shifting from one of said registered positions to another.

5. The apparatus according to any one of claims 3 and 4, characterized in that in use for encoding ten regularly spaced positions four coils and five plates are arranged respectively on the first and second mounting element (12, 14) on selected ones of ten regularly spaced portions, thereby providing a four-bit output.

6. The apparatus according to claim 2, characterized in that the two patterns are arranged along a line parallel to said planes and that the shift movement from one of said registered positions to another takes place along said line.

7. The apparatus according to claim 6, characterized in that in use for encoding ten regularly spaced positions four coils and nine plates are arranged respectively on said first and second mounting element thereby providing a four-bit output.

## Patentansprüche

1. Multipositionskodier-Gerät mit:
- einem ersten Element (12), das mehrere induktive Spulen (16) gemäß einem ersten ausgewählten Muster aufweist,
- einem zweiten Element (14), das dem ersten Element (12) benachbart ist, so daß, wenn eines der Elemente sich in einer begrenzten Anzahl von definierten Positionen in Bezug auf das andere befindet, mindestens eine auf dem ersten Element montierte Spule mit einer auf das zweite Element montierten Platte (18) zusammenwirkt,
- mehreren Schaltungen (20), die je an eine der Spulen gekoppelt sind, wobei jede Schaltung einen Ausgang (Ao) aufweist, wobei jede Schaltung einen ersten Signalpegel an diesen Ausgang liefert, wenn eine Platte (18) ihrer zugehörigen Spule (16) gegenüberliegt, und einen zweiten Signalpegel, wenn keine Platte ihrer zugehörigen Spule gegenüberliegt,
dadurch gekennzeichnet, daß das zweite Element (14) eine Vielzahl von Platten (18) aufweist, die gemäß einem zweiten ausgewählten Muster angeordnet sind, so daß für jede der definierten Positionen die Platten mit einer eindeutigen Kombination der Spulen zusammenwirken, wodurch ein Mehrbit-Ausgang erhalten wird.

2. Gerät nach Anspruch 1, dadurch gekennzeichnet, daß das erste Element (12) in einer ersten Ebene und das zweite Element (14) in einer zweiten Ebene parallel zur ersten angeordnet ist.

3. Gerät nach Anspruch 2, dadurch gekennzeichnet, daß die beiden Muster um eine gemeinsame Achse (19) kreisförmig angeordnet sind, welche auch die Achse für die relative Drehung dieser Elemente ist, wenn sie von einer der Positionen in die andere verschoben werden.

4. Gerät nach Anspruch 1, dadurch gekennzeichnet, daß die Spulen (16) einerseits und die Platten (18) andererseits auf zwei konzentrischen Zylindern angeordnet sind, die das erste und das zweite Element bilden und daß die Zylinder um die Achse relativ zueinander gedreht werden, wenn sie von einer definierten Position in eine andere verschoben werden.

5. Gerät nach einem beliebigen der Ansprüche 3 und 4, dadurch gekennzeichnet, daß bei einer Verwendung zur Kodierung von zehn gleichmäßig beabstandeten Positionen vier Spulen und fünf Platten auf dem ersten bzw. dem zweiten Element (12, 14) in ausgewählten zehn regelmäßig beabstandeten Abschnitten angeordnet sind, wodurch ein Vier-Bit-Ausgang enthalten wird.

6. Gerät nach Anspruch 2, dadurch gekennzeichnet, daß die beiden Muster entlang einer Geraden parallel zu den Ebenen angeordnet sind, und daß die Verschiebebewegung von einer der registrierten Positionen zu einer anderen entlang dieser Geraden stattfindet.

7. Gerät nach Anspruch 6, dadurch gekennzeichnet, daß bei einer Verwendung zur Kodierung von zehn gleichmäßig beabstandeten Positionen vier Spulen und neun Platten auf dem ersten bzw. dem zweiten Element angeordnet sind und damit einen Vier-Bit-Ausgang liefern.

## Revendications

1. Capteur de positions multiples , comportant:
- un premier élément support (12) présentant une pluralité de bobines d'induction (16) dans une première distribution sélectionnée,
- un second élément support (14), juxtaposé audit premier élément support (12), de façon que, lorsque l'un des éléments supports se trouve à l'une d'un nombre limité de positions d'alignement par rapport à l'autre, au moins une bobine montée sur le premier élément réagisse mutuellement avec une plaquette (18) montée sur le second élément,
- une pluralité de circuits (20), couplés, chacun, à l'une, respective, desdites bobines, chaque circuit présentant un terminal de sortie (Ao), chaque circuit opérant pour fournir un premier niveau de signal audit terminal de sortie lorsqu'une plaquette (8) est alignée avec sa bobine associée (6) et un second niveau de signal lorsqu'aucune plaquette n'est alignée avec sa bobine associée,
caractérisé par le fait que le second élément support (15) présente une pluralité de plaquettes (18) placées selon une seconde distribution sélectionnée, de façon que pour toute position d'alignement les plaquettes agissent mutuellement avec une combinaison exclusive desdites bobines, fournissant ainsi un signal de sortie multibit.

2. Capteur selon la revendication 1, caractérisé par le fait que le premier élément support (12) est disposé dans un premier plan et que le second élément support (14) est disposé dans un second plan parallèle au premier.

3. Capteur selon la revendication 2, caractérisé par le fait que les deux distributions sont circulaires autour d'un axe commun (19) qui est également l'axe de rotation relative desdits éléments lors du passage de l'une des dispositions à une autre.

4. Capteur selon la revendication 1, caractérisé par le fait que les bobines (16) d'une part et des plaquettes (18) d'autre part sont disposées sur deux cylindres concentriques constituant le premier et le second éléments supports, et que lesdits cylindres sont entrainés en rotation l'un par rapport à l'autre autour dudit axe lors du passage de l'une desdites positions d'alignement à une autre.

5. Capteur selon l'une quelconque des revendications 3 et 4, caractérisé par le fait qu'en emploi pour coder dix positions régulièrement espacées, quatre bobines et cinq plaquettes sont respectivement disposées sur le premier et le second éléments supports (12, 14), sur chacune, sélectionnée, de dix portions régulièrement espacées, fournissant ainsi un signal de sortie de quatre bits.

6. Capteur selon la revendication 2, caractérisé par le fait que les deux distributions sont disposées selon une ligne parallèle auxdits plans et que le mouvement de passage de l'une des dispositions d'alignement à une autre se produit le long de ladite ligne.

7. Capteur selon la revendication 6, caractérisé par le fait qu'en emploi pour coder dix positions régulièrement espacées, quatre bobines et neuf plaquettes sont respectivement disposées sur ledit premier et ledit second éléments de supports, fournissant ainsi un signal de sortie de quatre bits.
